# EUROPEAN PATENT APPLICATION

(11) **EP 4 797 095 A1**
(43) Date of publication of application: **26.08.2026**
(21) Application number: 24884759.2
(22) Date of filing: 29.10.2024
(51) Int. Cl.: G06F 9/50

(54) **COMPUTING ACCELERATION METHOD BASED ON CLOUD COMPUTING TECHNOLOGY AND CLOUD MANAGEMENT PLATFORM**

(30) Priority: 01.11.2023 CN 202311448485; 28.02.2024 CN 202410223761
(71) Applicant: Huawei Cloud Computing Technologies Co., Ltd., Gui'an New District, Guizhou 550025 (CN)
(72) Inventor: ZHOU, Mosong, Guiyang, Guizhou 550025 (CN); ZHU, Lei, Guiyang, Guizhou 550025 (CN); PENG, Qian, Guiyang, Guizhou 550025 (CN); XIE, Huaguo, Guiyang, Guizhou 550025 (CN)
(74) Representative: Maiwald GmbH
(86) International application number: PCT/CN2024/128277
(87) International publication number: WO 2025/092757

(57) **Abstract**

A computing acceleration method based on a cloud computing technology and a cloud management platform are provided. In the method, the cloud management platform may obtain a job task entered by a tenant, allocate, to at least one programmable compute device for processing, processing logic that is in job processing logic carried in the job task and that is applicable to a programmable compute device, and allocate, to at least one server for processing, other processing logic that is in the job processing logic and that is applicable to a server. This solution can be used to provide surplus cloud resources for the tenant to use, to obtain higher revenue and improve cloud resource utilization.

## Description

This application claims priority to Chinese Patent application No. 202311448485.6, filed with the China National Intellectual Property Administration on November 1, 2023 and entitled "SYSTEM AND METHOD FOR PROVIDING COMPUTATIONAL POWER ACCELERATION SERVICE BASED ON CLOUD TECHNOLOGY", which is incorporated herein by reference in its entirety. This application claims priority to Chinese Patent application No. 202410223761.7, filed with the China National Intellectual Property Administration on February 28, 2024 and entitled "COMPUTING ACCELERATION METHOD BASED ON CLOUD COMPUTING TECHNOLOGY AND CLOUD MANAGEMENT PLATFORM", which is incorporated herein by reference in its entirety.

### TECHNICAL FIELD

This application relates to the field of cloud technologies, and in particular, to a computing acceleration method based on a cloud computing technology and a cloud management platform.

### BACKGROUND

Cloud technology (cloud technology) is a hosting technology that unifies a series of resources such as hardware, software, and a network across a wide area network or a local area network to implement data computing, storage, processing, and sharing. When using an infrastructure as a service (infrastructure as a service, IaaS) service based on the cloud technology, a user pays for a compute resource that is obtained and used by the user. A purchasable compute resource includes a virtual machine, a container, a bare metal, or the like, and a user service runs on a purchased resource.

Currently, in addition to sellable resources for a user, a resource pool of a cloud vendor further includes some resources that cannot be purchased temporarily, for example, a compute resource centrally reserved from a management and control plane resource and a compute resource reserved for a node and a rack agent (agent) that is isolated from a purchasable resource pool. To achieve higher resource efficiency, management and control logic of many cloud compute nodes tends to be distributed. To be specific, a management and control plane resource originally reserved on each compute node is abstracted and centralized to a rack layer, and the management and control logic is also transferred from the compute node to a resource reserved on a rack. Because a quantity of resources reserved on the rack is greater than a quantity of resources reserved on a single node, when a management and control plane is not fully loaded, there is often a surplus capacity in the reserved resources.

In addition, with development of compute hardware, more network devices (for example, programmable devices) have possessed and gradually enhanced computing capabilities. However, the main function of the network devices is still receiving and sending (forwarding) network data, and their capabilities are shared by all network requests, causing surplus compute resources. Cloud vendors have not developed a purchase channel for the compute resources of the network devices.

To reduce a waste of surplus cloud resources, the cloud vendors are actively exploring how to expose various surplus resources to a user to obtain higher revenue and improve cloud resource utilization.

### SUMMARY

This application provides a computing acceleration method based on a cloud computing technology and a cloud management platform, to provide surplus cloud resources for a tenant to use, to obtain higher revenue and improve cloud resource utilization.

According to a first aspect, this application provides a computing acceleration method based on a cloud computing technology. The method may be applied to a cloud management platform, the cloud management platform is configured to manage an infrastructure, the infrastructure includes a plurality of servers and a plurality of programmable compute devices, and the method may include: The cloud management platform obtains a job task entered by a tenant, where the job task carries an acceleration request and job processing logic; the cloud management platform determines, based on the acceleration request, processing logic that is in the job processing logic and that is applicable to at least one of the plurality of programmable compute devices, and determines other processing logic that is in the job processing logic and that is applicable to at least one of the plurality of servers; the cloud management platform allocates, to the at least one of the plurality of programmable compute devices for processing, the processing logic that is in the job processing logic and that is applicable to the at least one of the plurality of programmable compute devices, and allocates, to the at least one of the plurality of servers for processing, the other processing logic that is in the job processing logic and that is applicable to the at least one of the plurality of servers; and the cloud management platform summarizes a processing result of the at least one programmable compute device of the plurality of programmable devices and a processing result of the at least one of the plurality of servers, and providing a summarized processing result for the tenant.

According to the foregoing method, the cloud management platform may allow the tenant to define the job task by itself, and may schedule compute resources in different servers or different programmable compute devices for the tenant to use, thereby implementing the job task. In the method, surplus cloud resources may be provided for the tenant to use, to obtain higher revenue and improve cloud resource utilization. A compute resource provided by any one of the foregoing servers may include a conventional compute resource that is reserved for a management and control plane and that is not fully utilized, or may include a dedicated compute resource that is originally used to offload communication logic, including but not limited to a CPU resource, an FPGA resource, and the like. A compute resource provided by any one of the foregoing programmable compute devices may include a compute resource added for the programmable compute device. This is not specifically limited in embodiments of this application.

With reference to the first aspect, in a possible implementation, the job task may include a big data job, and the plurality of servers include a CPU server. That the cloud management platform determines, based on the acceleration request, the processing logic that is in the job processing logic and that is applicable to the at least one programmable compute device of the plurality of programmable devices, and determines the other processing logic that is in the job processing logic and that is applicable to the at least one of the plurality of servers includes:

The cloud management platform determines a plurality of operators that are related to the job task, compiles and runs each operator on the plurality of programmable compute devices, uses a data processing throughput as a performance evaluation indicator, and selects a programmable compute device whose performance evaluation indicator meets a criterion as a target programmable compute device.

That the cloud management platform allocates, to the at least one of the plurality of programmable compute devices for processing, the processing logic that is in the job processing logic and that is applicable to the at least one of the plurality of programmable compute devices, and allocates, to the at least one of the plurality of servers for processing, the other processing logic that is in the job processing logic and that is applicable to the at least one of the plurality of servers includes:

The cloud management platform allocates, to the target programmable compute device for processing, a Filter operator, an Accumulator operator, a ReduceByKey operator, and a Broadcast operator that are related to the job task; and
the cloud management platform allocates, to at least one CPU server in the plurality of servers for processing, a Map operator, a Transform operator, and an Evaluate operator that are related to the job task.

According to the foregoing method, in a big data job scenario, the cloud management platform may schedule different compute resources for a big data job task, to achieve a computing acceleration effect on the big data job task based on the scheduled compute resources, improve data processing performance, and fully utilize compute resources on a corresponding server or programmable compute device, so that cloud resource utilization can be improved, and a cloud vendor can obtain higher revenue.

With reference to the first aspect, in a possible implementation, the job task may include a distributed training job, and the plurality of servers include a GPU server. That the cloud management platform determines, based on the acceleration request, the processing logic that is in the job processing logic and that is applicable to the at least one programmable compute device of the plurality of programmable devices, and determines the other processing logic that is in the job processing logic and that is applicable to the at least one of the plurality of servers includes:

The cloud management platform determines a plurality of operators that are related to the job task, compiles and runs each operator on the plurality of programmable compute devices, uses a data processing throughput as a performance evaluation indicator, and selects a programmable compute device whose performance evaluation indicator meets a criterion as a target programmable compute device.

That the cloud management platform allocates, to the at least one of the plurality of programmable compute devices for processing, the processing logic that is in the job processing logic and that is applicable to the at least one of the plurality of programmable compute devices, and allocates, to the at least one of the plurality of servers for processing, the other processing logic that is in the job processing logic and that is applicable to the at least one of the plurality of servers includes:

The cloud management platform allocates, to the target programmable compute device for processing, a Filter operator, an Accumulator operator, a ReduceByKey operator, and a Broadcast operator that are related to the job task; and
the cloud management platform allocates, to at least one GPU server in the plurality of servers for processing, a Map operator, a Transform operator, and an Evaluate operator that are related to the job task.

According to the foregoing method, in a distributed training job scenario, the cloud management platform may schedule different compute resources for a distributed training job task, to achieve a computing acceleration effect on the distributed training job task based on the scheduled compute resources, improve training efficiency, and fully utilize compute resources on a corresponding server or programmable compute device, so that cloud resource utilization can be improved, and a cloud vendor can obtain higher revenue.

With reference to the first aspect, in a possible implementation, the target programmable compute device includes a programmable network interface card and a programmable switch. That the cloud management platform allocates, to the target programmable compute device for processing, the Filter operator, the Accumulator operator, the ReduceByKey operator, and the Broadcast operator that are related to the job task includes: The cloud management platform allocates, to the programmable network interface card for processing, the Filter operator and the Accumulator operator that are related to the job task; and the cloud management platform allocates, to the programmable switch for processing, the ReduceByKey operator and the Broadcast operator that are related to the job task.

With reference to the first aspect, in a possible implementation, that the cloud management platform determines the plurality of operators that are related to the job task includes: The cloud management platform invokes an acceleration engine to generate a computational graph for the job processing logic, and determines, based on the computational graph, the plurality of operators that are related to the job task.

With reference to the first aspect, in a possible implementation, that the cloud management platform invokes the acceleration engine to generate the computational graph for the job processing logic includes: The cloud management platform starts an acceleration framework instance based on the acceleration request, and invokes, through the acceleration framework instance, the acceleration engine to generate the computational graph for the job processing logic.

With reference to the first aspect, in a possible implementation, the cloud management platform selects, in any one of the following evaluation solutions, the programmable compute device whose performance evaluation indicator meets the criterion: a runtime sampling evaluation solution, a simulation-based evaluation solution, a benchmarking estimation solution, or a model-based estimation solution.

With reference to the first aspect, in a possible implementation, the acceleration request includes user information. Before the cloud management platform determines, based on the acceleration request, the processing logic that is in the job processing logic and that is applicable to the at least one of the plurality of programmable compute devices, and determines the other processing logic that is in the job processing logic and that is applicable to the at least one of the plurality of servers, the method further includes: The cloud management platform performs identity authentication on the tenant based on the user information, and checks a cloud resource quota corresponding to the tenant.

With reference to the first aspect, in a possible implementation, the acceleration request further includes acceleration billing mode information. The method further includes: The cloud management platform generates billing log information based on the acceleration billing mode information when processing the at least one programmable compute device of the plurality of programmable devices and/or when processing the at least one of the plurality of servers.

With reference to the first aspect, in a possible implementation, an acceleration billing mode supported by the cloud management platform includes at least one of the following: a pay-per-usage billing mode, a pay-per-computing acceleration effect billing mode, a pay-per-resource cluster billing mode, and a time-limited or usage-limited billing mode.

With reference to the first aspect, in a possible implementation, one of a plurality of servers of the infrastructure includes any one of the following types: a bare metal server, a virtual machine, a container, a lightweight container, or a serverless instance.

With reference to the first aspect, in a possible implementation, the plurality of servers use the programmable network interface card, and the plurality programmable compute devices include the programmable network interface card.

With reference to the first aspect, in a possible implementation, the plurality of servers and the plurality of programmable compute devices of the infrastructure are deployed in rack servers in a same data center, and the plurality of programmable compute devices include the programmable switch that performs forwarding between the plurality of servers.

With reference to the first aspect, in a possible implementation, the plurality of servers and the plurality of programmable compute devices of the infrastructure are deployed across rack servers in different data centers, and the plurality of programmable compute devices include the programmable switch that performs forwarding between different rack servers.

According to a second aspect, this application provides a cloud management platform. The cloud management platform is configured to manage an infrastructure, the infrastructure includes a plurality of servers and a plurality of programmable compute devices, and the cloud management platform includes: a task obtaining module, configured to obtain a job task entered by a tenant, where the job task carries an acceleration request and job processing logic; an operator determining module, configured to determine, based on the acceleration request, processing logic that is in the job processing logic and that is applicable to at least one of the plurality of programmable compute devices, and determine other processing logic that is in the job processing logic and that is applicable to at least one of the plurality of servers; an operator allocation module, configured to allocate, to at least one of the plurality of programmable compute devices for processing, the processing logic that is in the job processing logic and that is applicable to the at least one of the plurality of programmable compute devices, and allocate, to at least one of the plurality of servers for processing, other processing logic that is in the job processing logic and that is applicable to the at least one of the plurality of servers; and a result providing module, configured to summarize a processing result of the at least one programmable compute device of the plurality of programmable devices and a processing result of the at least one of the plurality of servers, and provide a summarized result for the tenant.

With reference to the second aspect, in a possible implementation, the job task may include a big data job, and the plurality of servers include a CPU server. The operator determining module is configured to determine a plurality of operators that are related to the job task, compiles and runs each operator on the plurality of programmable compute devices, use a data processing throughput as a performance evaluation indicator, and select a programmable compute device whose performance evaluation indicator meets a criterion as a target programmable compute device. The operator allocation module is configured to: allocate, to the target programmable compute device for processing, a Filter operator, an Accumulator operator, a ReduceByKey operator, and a Broadcast operator that are related to the job task; and allocate, to at least one CPU server in the plurality of servers for processing, a Map operator, a Transform operator, and an Evaluate operator that are related to the job task.

With reference to the second aspect, in a possible implementation, the job task may include a distributed training job, and the plurality of servers include a GPU server. The operator determining module is configured to determine a plurality of operators that are related to the job task, compile and run each operator on the plurality of programmable compute devices, use a data processing throughput as a performance evaluation indicator, and select a programmable compute device whose performance evaluation indicator meets a criterion as a target programmable compute device.

The operator allocation module is configured to: allocate, to the target programmable compute device for processing, a Filter operator, an Accumulator operator, a ReduceByKey operator, and a Broadcast operator that are related to the job task; and allocate, to at least one GPU server in the plurality of servers for processing, a Map operator, a Transform operator, and an Evaluate operator that are related to the job task.

With reference to the second aspect, in a possible implementation, the target programmable compute device includes a programmable network interface card and a programmable switch, and the operator allocation module is configured to: allocate, to the programmable network interface card for processing, the Filter operator and the Accumulator operator that are related to the job task; and allocate, to the programmable switch for processing, the ReduceByKey operator and the Broadcast operator that are related to the job task.

With reference to the second aspect, in a possible implementation, the operator determining module is configured to invoke an acceleration engine to generate a computational graph for the job processing logic, and determine, based on the computational graph, the plurality of operators that are related to the job task.

With reference to the second aspect, in a possible implementation, the operator determining module is configured to start an acceleration framework instance based on the acceleration request, and invoke, through the acceleration framework instance, the acceleration engine to generate the computational graph for the job processing logic.

With reference to the second aspect, in a possible implementation, the operator allocation module is configured to select, in any one of the following evaluation solutions, the programmable compute device whose performance evaluation indicator meets the criterion: a runtime sampling evaluation solution, a simulation-based evaluation solution, a benchmarking estimation solution, or a model-based estimation solution.

With reference to the second aspect, in a possible implementation, the acceleration request includes user information, and the cloud management platform further includes a user identity management module, where the user identity management module is configured to perform identity authentication on the tenant based on the user information, and check a cloud resource quota corresponding to the tenant.

With reference to the second aspect, in a possible implementation, the acceleration request further includes acceleration billing mode information. The cloud management platform further includes a billing module, where the billing module is configured to generate billing log information based on the acceleration billing mode information when processing the at least one programmable compute device of the plurality of programmable devices and/or when processing the at least one of the plurality of servers.

With reference to the second aspect, in a possible implementation, an acceleration billing mode supported by the cloud management platform includes at least one of the following: a pay-per-usage billing mode, a pay-per-computing acceleration effect billing mode, a pay-per-resource cluster billing mode, and a time-limited or usage-limited billing mode.

With reference to the second aspect, in a possible implementation, one of a plurality of servers of the infrastructure includes any one of the following types: a bare metal server, a virtual machine, a container, a lightweight container, or a serverless instance.

With reference to the second aspect, in a possible implementation, the plurality of servers use the programmable network interface card, and the plurality programmable compute devices include the programmable network interface card.

With reference to the second aspect, in a possible implementation, the plurality of servers and the plurality of programmable compute devices of the infrastructure are deployed in rack servers in a same data center, and the plurality of programmable compute devices includes the programmable switch that performs forwarding between the plurality of servers.

With reference to the second aspect, in a possible implementation, the plurality of servers and the plurality of programmable compute devices of the infrastructure are deployed across rack servers in different data centers, and the plurality of programmable compute devices includes the programmable switch that performs forwarding between different rack servers.

According to a third aspect, an embodiment of this application provides a computer program product including instructions, where when the instructions are executed by a compute device cluster, the compute device cluster is caused to perform the method in the first aspect and any one of the possible designs of the first aspect.

According to a fourth aspect, an embodiment of this application provides a computer-readable storage medium, including computer program instructions, where when the computer program instructions are executed by a compute device cluster, the compute device cluster performs the method in the first aspect and any one of the possible designs of the first aspect.

According to a fifth aspect, an embodiment of this application provides a compute device cluster, including at least one compute device, where each compute device includes a processor and a memory; and the processor of the at least one compute device is configured to execute instructions stored in the memory of the at least one compute device, to cause the compute device cluster to perform the method in the first aspect and any one of the possible designs of the first aspect.

Based on the implementations provided in the foregoing aspects, embodiments of this application may be further combined to provide more implementations.

### BRIEF DESCRIPTION OF DRAWINGS

FIG. 1 is a diagram of an architecture of a cloud service system according to an embodiment of this application;
FIG. 2 is a diagram of an architecture of a cloud management platform according to an embodiment of this application;
FIG. 3 is a diagram of a computing acceleration principle according to an embodiment of this application;
FIG. 4 is a diagram of a deployment architecture according to an embodiment of this application;
FIG. 5 is a diagram of a deployment architecture according to an embodiment of this application;
FIG. 6 is a schematic flowchart of a computing acceleration method according to an embodiment of this application;
FIG. 7 is a diagram of a computing acceleration principle in a big data job scenario according to an embodiment of this application;
FIG. 8 is a diagram of a computing acceleration principle in a distributed training scenario of an AI model according to an embodiment of this application;
FIG. 9 is a diagram of an apparatus for providing heterogeneous computational power according to an embodiment of this application;
FIG. 10 is a diagram of a compute device according to an embodiment of this application;
FIG. 11 is a diagram of a compute device cluster according to an embodiment of this application; and
FIG. 12 is a diagram of a compute device cluster according to an embodiment of this application.

### DESCRIPTION OF EMBODIMENTS

To better explain embodiments of this application, the following first describes some terms or technologies described in embodiments of this application.
1. A cloud service is a service that is provided based on an internet (Internet) in a form of a representational state transfer application programming interface (representational state transfer application programming interface, REST API) and that meets a requirement of an enterprise internet technology (internet technology, IT) for elastic computing, a virtual network, data storage, a database, and the like.
   In embodiments of this application, a cloud service provider may be referred to as a cloud vendor for short.
2. A cloud resource is short for a cloud compute resource provided by a cloud vendor for a tenant, and is an integration of resources related to cloud computing, including a cloud service, a cloud instance, and the like.

For example, the cloud service may include, but is not limited to, a private network (virtual private cloud, VPC) providing service, a gateway providing service, a firewall service, a NAT service, a cloud disk, an elastic IP address (elastic IP address, EIP), a cloud eye service, and another cloud service provided by another cloud vendor. For example, the cloud instance may include, but is not limited to, a virtual machine, a container, or a bare metal server. The virtual machine, the container, or the bare metal server is a virtual instance provided by the cloud vendor in a data center of the cloud vendor for the tenant to use. In an optional implementation, the cloud instance may further include a lightweight container, a serverless instance, or the like. This is not limited in embodiments of this application.

In another optional implementation, different cloud resources may be further renamed based on different cloud resources. For example, a server that mainly provides CPU computational power may be referred to as a CPU server, and a server that mainly provides GPU computational power may be referred to as a GPU server. The terms are not distinguished or described one by one below.

3. A tenant is an owner of a cloud resource and has management permission over the cloud resource. The tenant may subscribe to or rent the cloud resource from a cloud vendor in a payment manner based on a service requirement, to use a cloud service implemented based on the cloud resource. The management permission of the tenant over the purchased cloud resource may include but is not limited to security management permission, access control permission, and the like. In some embodiments, an electronic device of the tenant may be referred to as a tenant node.

4. A user is a personnel that operates a cloud resource, and can operate the cloud resource only after being authorized by an owner of the cloud resource. In embodiments of this application, an operation performed by the user on the cloud resource may be implemented through an electronic device (including a physical device and/or a virtual apparatus) of the user. In some embodiments, the electronic device of the user may be referred to as a user node.

In the following embodiments, steps implemented by a tenant and the user may be replaced with each other, to be specific, a tenant node may be configured to implement the steps implemented by the user node, and the user node may also be configured to implement the steps implemented by the tenant node. In the following, the "user" and the "tenant" can be used interchangeably.

5. An infrastructure as a service (infrastructure as a service, IaaS) is a service mode in which a cloud computing infrastructure is provided externally as a service over a network and billing is calculated based on actual usage or occupation of resources of a user.

6. Data center (data center, DC):
The data center is a facility that uses a complex network, computing, and a storage system to provide shared access to applications and data, and may be figuratively referred to as a "building" that houses an information technology (information technology, IT) device used for communication and data storage.

A region (Region) and an availability zone (Availability Zone, AZ) are used to describe a location of the data center. A user may create a resource in a specific region or an AZ, and the specific region or the AZ may also be referred to as a site.
(1) A region is obtained through division based on dimensions of geographical location and network latency. Public services such as elastic computing, block storage, object storage, a virtual private cloud (Virtual Private Cloud, VPC) network, an elastic IP address (Elastic IP Address, EIP), and an image are shared in a same region. Regions are classified into a common region and a dedicated region. The common region is a region that provides a common cloud service for a public tenant, and the dedicated region is a dedicated region that carries only a same type of services or provides a service only for a specific tenant. Generally, one or more hosts (that is, nodes) may be deployed in a same region to implement at least one service (or referred to as a business).
(2) AZ: One AZ is a collection of one or more physical data centers and has independent ventilation, fire prevention, plumbing and drainage, and electricity. Computing, network, storage, and other resources in the AZ are logically divided into a plurality of clusters. A plurality of AZs within one region are interconnected via high-speed optical fibers to meet a requirement of a user for building a high-performance system across the AZs. Generally, one or more hosts (that is, nodes) may be deployed in a same AZ to implement at least one service (or referred to as a business).

7. Component (component):
The component is a simple encapsulation of data and a method. In short, the component is an object. The component may have its own attribute and method. The attribute is a simple visitor of component data, and the method includes some simple and visible functions of the component. Components deployed in a data center may include, for example, a server and rack, an energy system, a network connection, a security system, an automated management tool, a cooling system, and a compliant management policy. These components help maintain efficiency of the data center. In embodiments of this application, the component may be deployed on a node in the data center, and is configured to implement a corresponding service. For example, the components include an acceleration management and control component, an acceleration evaluation component, a compute task framework component, a compute engine component, a resource manager component, and the like that are deployed on a management node that provides a computing acceleration service. The "component" may also be referred to as a "module". The terms are not distinguished or described one by one below.

It should be noted that, in embodiments of this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" represents an "or" relationship between the associated objects. "At least one of the following items (pieces)" or a similar expression thereof indicates any combination of these items, and includes a singular item (piece) or any combination of a plurality of items (pieces). For example, at least one item (piece) of a, b, or c may indicate: a, b, c, a and b, a and c, b and c, or a, b, and c, where a, b, and c may be singular or plural.

Unless otherwise specified, ordinal numbers such as "first" and "second" mentioned in embodiments of this application are used to distinguish between a plurality of objects, but are not used to limit priorities or importance degrees of the plurality of objects. For example, a first device and a second device are merely used to distinguish between different electronic devices, but do not indicate different priorities, importance degrees, or the like of the two devices. For example, in some embodiments, method steps performed by the first device and method steps performed by the second device may be exchanged.

The following describes this application in detail with reference to the accompanying drawings and embodiments.

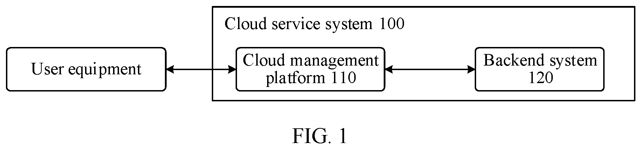

FIG. 1 is a diagram of an architecture of a cloud service system according to an embodiment of this application.

As shown in FIG. 1, the cloud service system 100 may include a cloud management platform 110 and a backend system 120 that are provided by a cloud vendor for a tenant.

The cloud management platform 110 may be externally connected, over an internet, to user equipment (user equipment, UE) operated by the tenant, and the tenant may subscribe to a cloud service on a cloud vendor side through the cloud management platform 110, and perform resource configuration on the purchased cloud service. For example, the tenant may register an account on the cloud management platform 110 through the user equipment, where the account is eligible to purchase (including different payment forms such as subscription or renting) a cloud resource. After the cloud resource is successfully purchased, the cloud management platform 110 may notify the corresponding backend system 120 to create the cloud resource for the tenant, and provide a proper access manner for the tenant and a user authorized by the tenant, so that the tenant remotely manages the cloud resource, and the tenant/user is controlled to remotely access or use the cloud resource, thereby providing at least one cloud service for the tenant and the user.

For example, the cloud resource is a virtual machine, and the tenant may select a specification (for example, a memory, a processor, and a disk) of the virtual machine on the cloud management platform 110. After the tenant pays successfully, the cloud management platform 110 notifies the corresponding backend system 120 to create the virtual machine having the specification. The tenant may configure permission (for example, logging in to the virtual machine (virtual machine) or performing a shutdown operation or a deletion operation on the virtual machine) for the user authorized by the tenant to access the virtual machine. After the configuration succeeds, the user can perform a corresponding authorization operation on the virtual machine. The tenant may also grant the user permission to purchase or create the virtual machine. It should be understood that, in this embodiment of this application, the cloud resource may also be, for example, various cloud services such as a container, a bare metal server, and an elastic IP address (Elastic IP Address, EIP). A cloud service type is not limited in embodiments of this application.

The cloud management platform 110 may be connected to the corresponding backend system 120 in the cloud service system 100 over an internal network. The backend system 120 may provide various data processing functions such as access, processing, aggregation, and storage for a request or data from the user equipment or a third-party device, and provide, for the tenant/user, functions such as querying for and using stored data, to provide a corresponding cloud service for the tenant/user.

In an example, the cloud service provided for the tenant/user may include a computing acceleration service based on a cloud computing technology. The backend system 120 may include an infrastructure, and the infrastructure may include a resource pool, for example, include related software and hardware devices such as a server, a storage device, a network device, a security device, virtualization software, and storage software that are required by a compute resource, a storage resource, a network resource, a security resource, and the like. The network device may include a programmable compute device, for example, a programmable network interface card or a programmable switch. An implementation of the infrastructure is not limited in embodiments of this application. For ease of description, the infrastructure is divided into a plurality of servers and a plurality of programmable compute devices below. Any one of the plurality of servers may be configured to provide the compute resource, the storage resource, the security resource, or the like. Any one of the plurality of programmable compute devices may be configured to provide the network resource, and may be further configured to provide the compute resource. The cloud management platform 110 may be configured to manage the infrastructure, and schedule available compute resources in the plurality of servers and the plurality of programmable compute devices for the tenant/user, to provide surplus cloud resources in the cloud service system for the tenant/user to use, thereby obtaining higher revenue and improving cloud resource utilization.

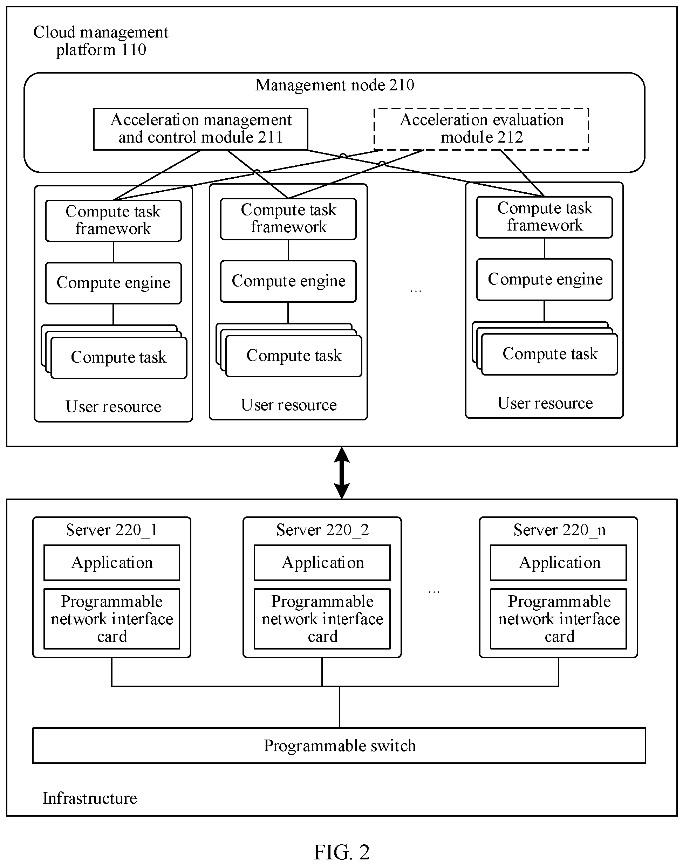

During specific implementation, as shown in FIG. 2, a cloud management platform 110 may include a management node 210. The management node 210 may implement unified management and scheduling of a compute resource, a storage resource, a network resource, a security resource, and the like, and provide a cloud service for a tenant/user, for example, a computing acceleration service. In an optional implementation, the management node 210 may further support cloud service operation and maintenance security through relatively comprehensive cloud security defense, monitoring, analysis, and response, to implement quick discovery, quick isolation, quick recovery, and the like of a cloud security risk, threat, and attack.

For example, the computing acceleration service may be an application acceleration service (application acceleration service). The management node 210 may be configured to obtain a job task entered by the tenant, and help, by using a compute resource in a cloud compute resource pool, provide a computing acceleration service for an acceleration request and job processing logic that are carried in the job task, to shorten processing time of the job task.

As shown in FIG. 2, an infrastructure configured to provide a cloud service may include, for example, a plurality of servers 220 and a plurality of programmable compute devices. The plurality of servers 220 are also referred to as a server cluster, and may include, for example, a server 220_1, a server 220_2, ..., a server 220_n, and the like, where n is an integer, and represents a quantity of servers. Any server may also use a programmable network interface card, which may be configured to enable the server to have a network communication capability. In addition, the programmable network interface card may further have a computing capability. The plurality of programmable compute devices may include the programmable network interface card of the server. Forwarding may also be performed between different servers through a programmable switch. In addition, the programmable switch may also have a computing capability. The plurality of programmable compute devices may also include the programmable switch.

A processor of one of the plurality of servers 220 may be a general purpose processor, for example, a central processing unit (Central Processing Unit, CPU) or a microprocessor. At least one application (application, APP) may be configured in one of the plurality of servers 220, and the processor and the application may provide a cloud service through software invoking. In an optional implementation, the processor of one of the plurality of servers 220 may be a processor of another type, including but not limited to a coprocessor (coprocessor), a graphics processing unit (graphics processing unit, GPU), a field programmable gate array (Field Programmable Gate Array, FPGA), various domain specific architectures (Domain Specific Architectures, DSAs), an application-specific integrated circuit (application-specific integrated circuit, ASIC), a virtual computing (Virtual Computing) device, or another processor engine (represented as xPU, where x represents unknown). For ease of differentiation, in this embodiment of this application, a server that mainly provides CPU computational power may be referred to as a CPU server, and a server that mainly provides GPU computational power may be referred to as a GPU server. Other servers are similar, and details are not described herein.

Cloud compute resources provided by the plurality of servers 220 may include a conventional compute resource, for example, a conventional compute resource that is reserved for a management and control plane in a cloud service system and that is not fully utilized. Alternatively, a cloud compute resource provided by at least one type of computing hardware may include a dedicated compute resource that is originally used to offload communication logic, including but not limited to a CPU resource, an FPGA resource, and the like. Alternatively, a cloud compute resource provided by at least one type of computing hardware may include compute resources provided by a plurality of network devices. The network device may include a programmable network device, for example, a programmable switch or a programmable network interface card, and may be configured to provide computing acceleration support by using a computing capability of the network device when information exchange between different servers and a communication network is implemented, to provide surplus cloud resources for the tenant to use, so as to implement computing acceleration, obtain higher revenue, and improve cloud resource utilization.

During specific implementation, the cloud management platform may provide a configuration entry for the tenant, so that the tenant initiates the job task, to request the cloud management platform to provide the computing acceleration service.

In an optional implementation, the tenant may initiate the job task based on an application layer. For example, the cloud management platform may provide, for the tenant in at least one manner, a service type of an available computing acceleration service. The service type may include but is not limited to a service implemented by an application configured to provide at least one of the following services: a rendering (Rendering) service, a video codec (Media codec) service, a machine learning (Machine Learning) service, a security (Security) service, an artificial intelligence (Artificial Intelligence, AI) service, a high performance computing (High performance computing, HPC) service, a big data processing service, a storage (Storage) service, or a network (network) service. The tenant may enter a job task for the foregoing service type to the cloud management platform, where the job task may carry an acceleration request and job processing logic, to request the cloud management platform to implement the foregoing service based on the infrastructure. The job task may also be referred to as a user service load or a load job. This is not limited in embodiments of this application.

Alternatively, in another optional implementation, the tenant may initiate the job task based on a cloud resource type. For example, the cloud management platform may provide, for the tenant in at least one manner, a cloud resource type (or referred to as an available acceleration resource type) that can be used to provide a computing acceleration service, including but not limited to a sellable resource in a compute resource pool, the conventional compute resource that is reserved for the management and control plane in the cloud service system and that is not fully utilized, the dedicated compute resource that is originally used to offload communication logic in the cloud service system, or the compute resources provided by the plurality of network devices in the cloud service system.

To improve architecture consistency, scalability, universality, portability, and ondemand enabling of the entire system, in an implementation, one or more compute task frameworks are designed. The one or more compute task frameworks are a part of the computing acceleration service, may be deployed on the management and control plane or a user data plane, may be in one-to-one correspondence with the job task entered by the tenant, and are used to connect the computing acceleration service and a compute engine, to plan an available compute resource (including the conventional compute resource and a programmable compute resource used to implement acceleration processing) for the acceleration request carried in the job task, and provide runtime support for a compute task corresponding to the acceleration request.

For example, the compute task framework causes the management node 210 to be oriented to different customer platforms, support a cloud resource in all scenarios of a virtual machine, a bare metal, a container, and a serverless (Serverless) instance, and allow different compute resources to be registered through abstract registration interfaces. After the tenant successfully purchases or rents the cloud resource, the management node 210 may create, based on requirement information or configuration information of the tenant, the cloud resource for the tenant and construct the resource pool required by the tenant. The cloud resources in the resource pool of the tenant may be collectively referred to as a user resource. Then, in an application phase, the management node 210 may receive the job task from the tenant, where the job task may carry the acceleration request and the job processing logic. The management node 210 may start a corresponding acceleration framework instance based on the acceleration request. When the acceleration framework instance runs, execution and management of a corresponding compute task may be implemented through a corresponding compute engine, for example, task scheduling, task distribution, and result summarization. A compute resource that can be used to provide a computing acceleration capability required by the compute task includes a compute resource provided by the programmable compute device, and may further include another type of compute resource described above.

It should be noted that, in this embodiment of this application, the management node 210 may allocate one or more compute task frameworks to a same acceleration request, and start a corresponding acceleration framework instance. The one or more compute task frameworks may be separately configured to implement a part of processing logic or operators related to the computing acceleration request. This is not limited in embodiments of this application.

In an example, the management node 210 may be logically divided into an acceleration management and control module 211 and an acceleration evaluation module 212. The acceleration management and control module 211 may allocate the compute task framework to the acceleration request, and allocate an available compute resource to the corresponding job processing logic through the compute task framework. For example, the acceleration management and control module allocates, to at least one of the plurality of programmable compute devices for processing, processing logic that is in the job processing logic and that is applicable to the at least one of the plurality of programmable compute devices, and allocates, to at least one of the plurality of servers for processing, other processing logic that is in the job processing logic and that is applicable to the at least one of the plurality of servers. In an optional implementation, before the acceleration management and control module 211 allocates the compute task framework to the acceleration request, the acceleration evaluation module 212 may be configured to: evaluate whether each piece of processing logic related to the job processing logic is suitable for acceleration, and predict an acceleration effect. The compute task framework may allocate, based on acceleration effect prediction information provided by the acceleration evaluation module 212, a part or all of the processing logic in the job processing logic to a corresponding server or programmable compute device for processing.

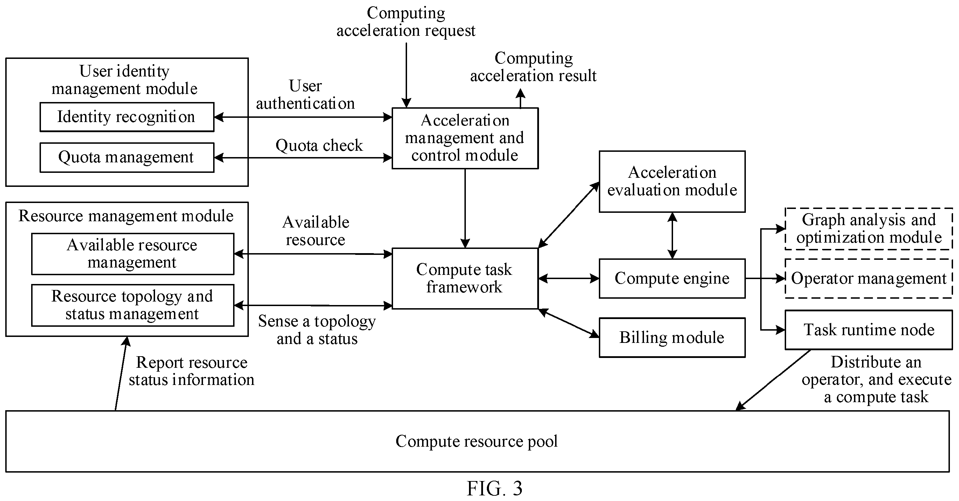

For example, as shown in FIG. 3, an acceleration management and control module 211 may obtain a job task entered by a tenant, where the job task carries an acceleration request and job processing logic. The acceleration management and control module 211 may start an acceleration framework instance based on the acceleration request, and invoke, in a corresponding compute task framework, a compute engine to generate a computational graph for the job processing logic in the job task. The compute task framework may determine, based on the computational graph, a plurality of operators related to the job task, and compile and run each operator on a plurality of programmable compute devices. An acceleration evaluation module 212 may collect a related performance indicator of each operator during compilation and running on the plurality of programmable compute devices, and provide the performance indicator for the compute task framework. The compute task framework may use a data processing throughput as a performance evaluation indicator, and select, from the plurality of programmable compute devices, a programmable compute device whose performance evaluation indicator meets a criterion as a target programmable compute device. The compute task framework may allocate, to the target programmable compute device for processing, a Filter operator, an Accumulator operator, a ReduceByKey operator, and a Broadcast operator that are related to the job task. In addition, the compute task framework may further allocate, to at least one of a plurality of servers for processing, other processing logic that is in the job processing logic and that is applicable to the at least one of the plurality of servers, for example, allocate the other processing logic to a CPU server or a GPU server in a compute resource pool.

In this embodiment of this application, an evaluation solution used by the acceleration evaluation module 212 may be provided by a cloud vendor and configured by the tenant, or may be defined by the tenant itself and negotiated with the cloud vendor. This is not limited in embodiments of this application. During specific configuration, the evaluation solution may be configured through a configuration interface or an API document, or may be configured in another manner.

For example, the evaluation solution used by the acceleration evaluation module 212 may include any one of the following:
(1) Runtime sampling evaluation solution: For each operator related to the job task, the acceleration evaluation module 212 may compile various available acceleration resources, start a corresponding task processing process on the available acceleration resources, sample a related performance indicator in the task processing process, and compare sampled data with processing performance of the task on a CPU server, to obtain an acceleration effect. The acceleration effect is an acceleration evaluation effect for the acceleration request.
(2) Simulation-based evaluation solution: The acceleration evaluation module 212 may simulate, in a simulation manner, that the job processing logic or the operator corresponding to the acceleration request runs on various available acceleration resources, and compare a running effect with simulation performance of the same task on a CPU server, to obtain an acceleration effect. The acceleration effect is an acceleration evaluation effect for the acceleration request.
(3) Benchmarking estimation solution: A benchmark test is determined in advance for various processing logic or operators, a computing test runs on various available acceleration resources to obtain a performance evaluation result, and a performance evaluation result of the benchmark test is used as a performance result of a load or the operator on the compute resource. The result is an acceleration evaluation effect for the acceleration request.
(4) Model-based estimation solution: The acceleration evaluation module 212 may perform modeling on logic of an operator and a computational process of a compute resource, and obtain an acceleration evaluation effect through model calculation and comparison. This result is an acceleration evaluation effect for the acceleration request.

It should be understood that the foregoing evaluation solution is merely an example rather than any limitation. During specific implementation, the acceleration evaluation module 212 may further evaluate, through another solution, each processing logic related to the job task, whether each operator is suitable for acceleration, and predict an acceleration effect. Details are not described herein again.

During specific implementation, the cloud management platform shown in FIG. 2 may further include a user identity management module, a resource management module, and a billing module.

As shown in FIG. 3, the user identity management module may be configured to record identity information (which may also be referred to as user information) of the tenant and record the quota of the cloud resource purchased or subscribed by the tenant when the tenant purchases or subscribes to the cloud resource. The user identity management module may be configured to provide related operations of user identity authentication and quota check for the acceleration management and control module. For example, the acceleration request may include user information. The acceleration management and control module may interact with the user identity management module based on the user information, to perform identity authentication (for example, including identity recognition) on the tenant, and check a quota, a balance, and the like of a cloud resource corresponding to the tenant. If it is determined that the tenant is allowed to use a computing acceleration service, the corresponding acceleration framework instance is allocated and started for the acceleration request, so that the corresponding compute task framework performs resource scheduling for the job task.

The resource management module may be configured to record information about all compute resources in the compute resource pool, including information about computing capabilities provided by different compute devices and topology information between different compute resources. In addition, the resource management module may be further configured to collect resource status information reported by the compute resource pool, including scheduling information, usage status information, and the like of different compute resources. The resource management module may be configured to provide information about an available resource for the compute task framework, and cause the compute task framework to sense topologies and statuses of different compute resources, so that the compute task framework allocates available compute resources to the job task, including the compute resources provided by the server and the compute resources provided by the programmable compute device.

The computational graph may include a topological relationship between different processing logic. The acceleration evaluation module may provide performance indicators obtained after different processing logic is compiled and run on the plurality of programmable compute devices. The compute task framework may apply to the resource management module for a conventional compute resource and/or a programmable compute resource by combining the available compute resource information, a computational graph orchestration result, and an algorithm corresponding to each job processing logic of the job task. The compute task framework may generate scheduling information for a plurality of operators that are related to a job task. The scheduling information includes information about an operator executed by at least one piece of computing hardware. The at least one piece of computing hardware includes computing hardware of a server and computing hardware provided by a programmable compute device.

The compute task framework may send the scheduling information to the compute engine, where the scheduling information may indicate target programmable compute devices and/or target servers allocated to different operators related to the job task. As a task runtime node, the compute engine may distribute an operator based on the scheduling information, to execute the corresponding compute task. For example, the compute engine may allocate, to the target programmable compute device for processing, the Filter operator, the Accumulator operator, the ReduceByKey operator, and the Broadcast operator that are related to the job task, or allocate, to at least one of the plurality of servers (for example, CPU servers or GPU servers) for processing, a Map operator, a Transform operator, and an Evaluate operator that are related to the job task, to complete actual job task processing. In an optional implementation, the compute engine may further optimize the scheduling information of the job task through an optimizer, for example, optimize the computational graph through a graph analysis optimization method. Optionally, the compute engine may further implement operator management based on the scheduling information, for example, schedule some operators to proper computing hardware for execution, or re-schedule some operators between different hardware that supports the related operators.

In a process of executing a plurality of operators related to the job task, hardware of the corresponding compute resource may further report the resource status information to the resource management module, or feed back running status information to the compute task framework through the task runtime node. The compute task framework may further obtain resource running information by interacting with the resource management module and/or the task runtime node, to perform resource scheduling for a next acceleration request in time based on running information of different compute resources. In addition, the compute task framework may further acquire, based on the billing mode selected by the tenant, billing log information generated in a processing process of each operator, and send the billing log information to the billing module. The billing module may charge the tenant based on the billing log information and the billing mode configured by the corresponding tenant.

For example, the billing mode may be configured in any one of the following three configuration manners.

Configuration manner 1: The cloud management platform may provide a user interface (user interface, UI) for the tenant. The user interface may include at least one configuration option of an acceleration billing mode for the tenant to enter or select, to complete related configuration of the acceleration billing mode.

Configuration method 2: The cloud management platform provides a software development kit (software development kit, SDK) of the computing acceleration service for the tenant, so that the tenant can integrate the SDK of the computing acceleration service into purchased user resources, invoke related cloud resources to provide the computing acceleration service for the tenant by invoking software, and implement billing management based on the corresponding billing mode.

Configuration mode 3: The cloud management platform provides an application programming interface (application programming interface, API) for the tenant, so that the tenant can provide an API configuration file for the cloud management platform to complete related configuration of the acceleration billing mode.

For any one of the foregoing configuration manners, the at least one acceleration billing mode that can be selected by the tenant includes but is not limited to at least one of the following solutions.
(1) Pay-per-usage billing mode: includes but is not limited to billing by entering data volume, billing by computation volume, billing by network transmission data volume, and billing by computing time.
(2) Pay-per-computing acceleration effect billing mode: The computing acceleration effect may include but is not limited to acceleration effect improvement of computing key indicators such as computing time, a task throughput, and a data processing rate.
(3) Pay-per-resource cluster billing mode: A programmable compute device (including a programmable network, a programmable switch, or the like), a high-performance network, a conventional compute resource, and the like can be packaged to form a dedicated cluster. The tenant is charged based on a specification and a quantity of compute resources in the cluster.
(4) Time-limited or usage-limited billing mode: The tenant can use the computing acceleration service within a specified period of time and amount (including but not limited to the resource amount, data volume, or effect) and is charged.

It should be understood that the billing mode may be preconfigured by the tenant, or may be configured by the tenant when the tenant enters the job task. This is not limited in this embodiment of this application.

After the job task processing is completed, the compute task framework may send a computing acceleration result to the acceleration management and control module, including a processing result of at least one programmable compute device of the plurality of programmable devices and a processing result of at least one of the plurality of servers. The acceleration management and control module may summarize results and provide the results to the tenant, to present a corresponding acceleration processing result to the tenant on a visual interface associated with the cloud management platform. In this case, the job task processing and feedback are complete.

Through the foregoing cloud management platform, various surplus cloud resources of the cloud vendor may be provided to the tenant to provide the computing acceleration service for the tenant, so that various surplus cloud resources in the cloud service system can be fully utilized, utilization of the cloud resources is improved, and service and profiting manners are enriched, to increase revenue of the cloud vendor. This solution can be used to convert some reserved cloud compute resources from available and unsold resources in a data plane to sellable compute resources. In this way, users can purchase acceleration resources on demand and obtain better service processing performance.

It should be noted that the cloud management platform and the infrastructure in embodiments of this application may be deployed in different architectures in different deployment scenarios, for example, a single-node (single server) deployment architecture, a virtual machine (virtual machine, VM) deployment architecture, a pooling deployment architecture in a data center (for example, a rack server (Rack)), or a pooling deployment architecture across data centers (for example, a Rack).

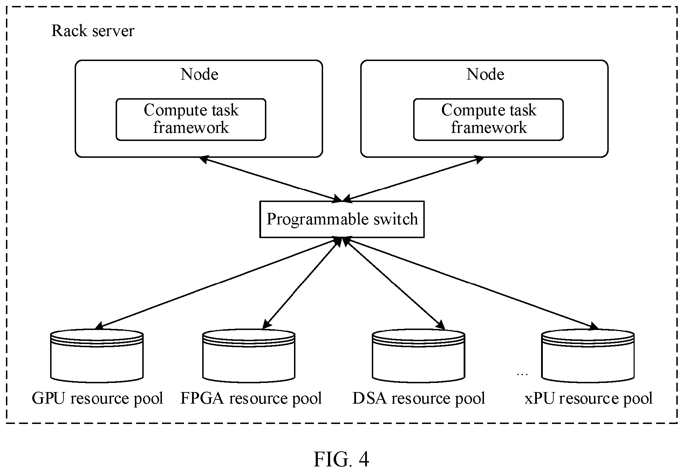

For the pooling deployment architecture in a data center (for example, a rack server (Rack)), as shown in FIG. 4, the data center may include a plurality of nodes and a plurality of resource pools. When a system for providing computational power in this application is established in the data center, each node (node) may be used as a node for implementing a compute task framework. The plurality of resource pools may include, for example, a GPU resource pool, an FGPA resource pool, a DSA resource pool, or another type of xPU resource pool. Each node may interact with different resource pools through a programmable switch (switch), distributes compute tasks related to a job task triggered by a service to appropriate hardware computing resource pools for processing. The programmable switch may support but is not limited to a high-speed interconnection protocol such as a UB/CXL, and has a computing capability. A compute resource of the programmable switch may alternatively be an available compute resource scheduled by the compute task framework for the job task.

This deployment architecture supports fast interconnection (a low latency) within the rack and can expand a hardware device of the system from a single-host resource to remote computational power, that is, supports pooling deployment of computational power. In addition, a high-speed interconnection bus (such as a Unified Bus and a CXL) can be used to integrate compute resources of different types and architectures (such as a GPU, an FPGA, a DSA, and an xPU) into a unified computing power pool. Resource pooling and scheduling management technologies are used to implement unified management and efficient utilization of these compute resources.

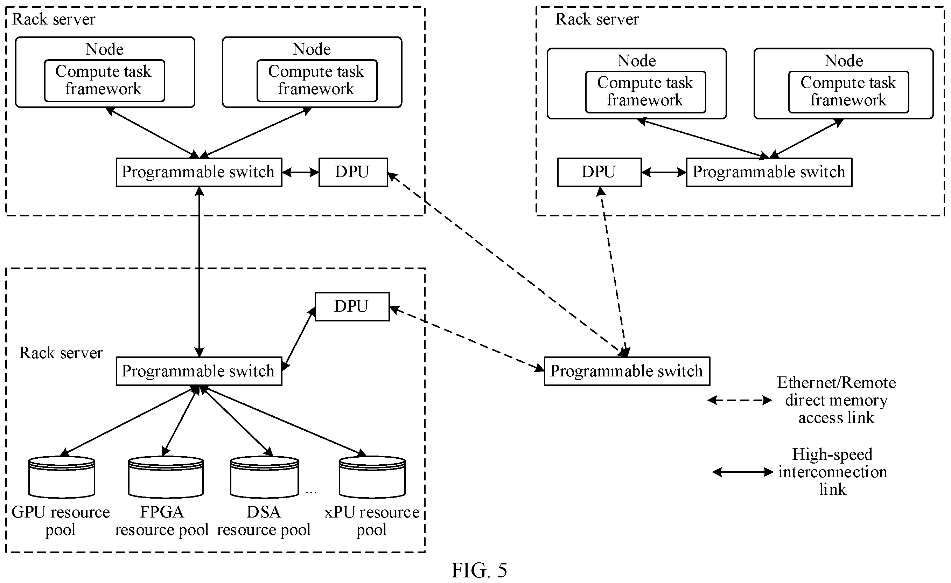

For the pooling deployment architecture across data centers (for example, racks), as shown in FIG. 5, in this scenario, communication and interaction may be performed inside a data center through a programmable switch and a high-speed interconnection link, and communication and interaction may be performed between different data centers, that is, across racks, through a programmable switch and an Ethernet/remote direct memory access (Remote Direct Memory Access, RDMA) link. This architecture causes the tenant to deploy and use resources on demand, to improve resource utilization of the overall architecture. The compute resource of the programmable switch in the architecture may alternatively be an available compute resource scheduled by the compute task framework for the job task.

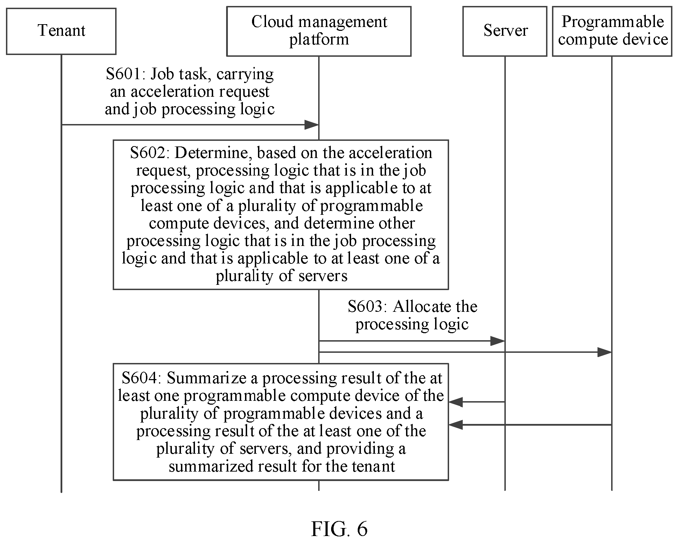

FIG. 6 is a schematic flowchart of a computing acceleration method according to an embodiment of this application. The method may be performed by the cloud management platform deployed in FIG. 1 to FIG. 3, and the cloud management platform may manage the infrastructure in FIG. 1 to FIG. 5. As shown in FIG. 6, the method may include the following steps.

S601: The cloud management platform obtains a job task entered by a tenant, where the job task carries an acceleration request and job processing logic.

S602: The cloud management platform determines, based on the acceleration request, processing logic that is in the job processing logic and that is applicable to at least one of a plurality of programmable compute devices, and determines other processing logic that is in the job processing logic and that is applicable to at least one of a plurality of servers.

S603: The cloud management platform allocates, to the at least one of the plurality of programmable compute devices for processing, the processing logic that is in the job processing logic and that is applicable to the at least one of the plurality of programmable compute devices, and allocates, to the at least one of the plurality of servers for processing, the other processing logic that is in the job processing logic and that is applicable to the at least one of the plurality of servers.

S604: The cloud management platform summarizes a processing result of the at least one programmable compute device of the plurality of programmable devices and a processing result of the at least one of the plurality of servers, and providing a summarized result for the tenant.

For specific implementation details of the foregoing computing acceleration method, refer to the foregoing related descriptions with reference to FIG. 1 to FIG. 5. Details are not described herein again.

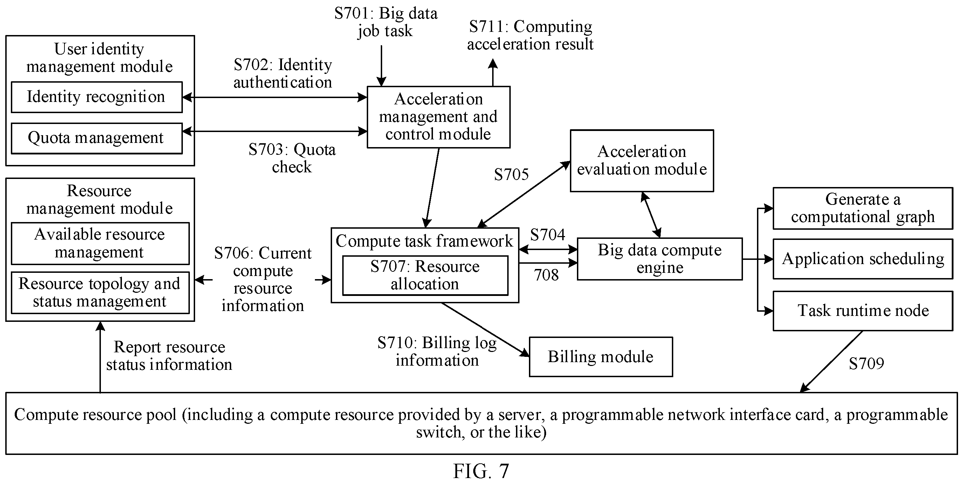

For example, as shown in FIG. 7, when the foregoing computing acceleration method is applied to a big data operation scenario, an implementation process of the cloud management platform may include the following steps.

S701: A tenant enters a job task to the cloud management platform, to trigger a process of accelerating a big data job. An acceleration management and control module that is of the cloud management platform and that is configured to provide a computing acceleration service obtains a big data job task entered by the tenant. The job task carries an acceleration request and job processing logic that specifies the big data job, and indicates a storage location of to-be-processed data.

S702: The acceleration management and control module interacts with a user identity management module, performs identity authentication on the tenant based on user information in the acceleration request, and performs integrity and validity check on the acceleration request.

S703: The acceleration management and control module interacts with the user identity management module and checks a cloud resource quota corresponding to the tenant. It may be understood that, in this embodiment of this application, S702 and S703 may alternatively be simultaneously performed, and an execution sequence of the two steps is not specifically limited in embodiments of this application.

S704: After the acceleration management and control module starts an acceleration framework instance for the big data job task, a corresponding compute task framework may invoke a big data compute engine to generate a computational graph.

S705: An acceleration evaluation module obtains, from the big data compute engine, a plurality of operators related to the big data job task, and compiles and runs each operator on a plurality of programmable compute devices. The acceleration evaluation module may obtain a related performance indicator of each operator during compilation and running on the plurality of programmable compute devices, and may use a data processing throughput as a performance evaluation indicator to obtain acceleration effect evaluation information. The acceleration evaluation module may provide the acceleration effect evaluation information for the acceleration management and control module.

S706: The compute task framework queries a resource management module for current compute resource information, including a resource quantity, future resource availability, and the like.

S707: The compute task framework allocates a conventional compute resource and a programmable compute resource to the big data job task by combining information about an available compute resource that is queried from the resource management module, the computational graph obtained from the big data compute engine, the acceleration effect evaluation information obtained from the acceleration evaluation module, and the like.

For example, (1) a Map operator, a Transform operator, an Evaluate operator, and the like are allocated to a CPU server based on an acceleration effect evaluation result; (2) a Filter operator, an Accumulator operator, and the like are allocated to a programmable network interface card based on the acceleration effect evaluation result; and (3) a ReduceByKey operator, a Broadcast operator, and the like are allocated to a programmable switch based on the acceleration effect evaluation result.

S708: The compute task framework notifies the big data engine of a resource allocation result.

S709: The big data compute engine may be used as a task runtime node, and distributes a compute task (including a plurality of subtasks) to a target compute device for execution during running. The target compute device may include a device that provides the conventional compute resource, for example, a CPU server or a GPU server. The target compute device may also include a device that provides the programmable compute resource described above, for example, the programmable network interface card or the programmable switch, and is configured to implement an operation process related to the Filter operator, the Accumulator operator, or the like in a big data processing process, to complete a part of subtasks related to big data processing in a communication process, thereby improving overall data processing performance.

S710: In a process of performing computing, the compute task framework may further collect, based on acceleration billing mode information carried in the acceleration request, an amount of data processed by each computing acceleration device, to generate billing log data, and push billing information to a billing module.

S711: After the computing ends, the compute task framework may feed back a computing acceleration result of the big data job task to the acceleration management and control module, and the acceleration management and control module may provide the computing acceleration result of the big data job task for the tenant.

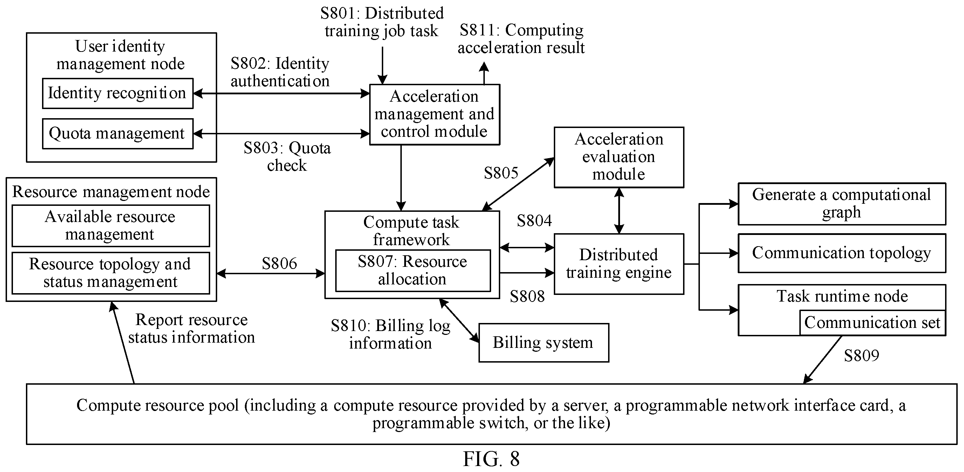

For example, as shown in FIG. 8, when the foregoing computing acceleration method is applied to a distributed training scenario of an AI model, an implementation process of the computing acceleration service may include the following steps.

S801: A tenant enters a job task to a cloud management platform, to trigger a process of accelerating a distributed training job of the AI model. An acceleration management and control module that is of the cloud management platform and that is configured to provide the computing acceleration service obtains a distributed training job task entered by the tenant. The job task carries an acceleration request and job processing logic, and specifies a location of a to-be-trained AI model and a location of a training sample.

S802: The acceleration management and control module interacts with a user identity management module, performs identity authentication on the tenant based on user information in the acceleration request, and performs integrity and validity check on the acceleration request.

S803: The acceleration management and control module interacts with the user identity management module and checks a cloud resource quota corresponding to the tenant. It may be understood that, in this embodiment of this application, S802 and S803 may alternatively be simultaneously performed, and an execution sequence of the two steps is not specifically limited in embodiments of this application.

S804: After the acceleration management and control module starts an acceleration framework instance for the distributed training job task, a corresponding compute task framework invokes a distributed training engine to generate a model computational graph and a communication topology.

S805: An acceleration evaluation module uses a performance indicator of a preset operator on each type of compute resource as an evaluation indicator, and provides, for the compute task framework, acceleration effect evaluation information of a plurality of operators related to the distributed training job task. For example, a data processing throughput is used as a performance evaluation indicator, and the acceleration effect evaluation information of the plurality of operators related to the distributed training job task is provided for the compute task framework.

S806: The compute task framework queries a resource management module for current compute resource information, including a resource quantity, future resource availability, and the like.

S807: The compute task framework allocates a conventional compute resource and a programmable compute resource to the plurality of operators related to the distributed training job task by combining information about an available compute resource that is queried from the resource management module, the computational graph obtained from the distributed training compute engine, the acceleration effect evaluation information obtained from the acceleration evaluation module, and the like.

For example, (1) a Map operator, a Transform operator, an Evaluate operator, and the like are allocated to a GPU server based on an acceleration effect evaluation result; and (2) a Filter operator, a Broadcast operator, an Accumulator operator, a ReduceByKey operator, and the like are allocated to a programmable network device based on the acceleration effect evaluation result. For example, the Filter operator and the Accumulator operator that are related to the job task are allocated to a programmable network interface card for processing, and the ReduceByKey operator and the Broadcast operator that are related to the job task are allocated to a programmable switch for processing.

S808: The compute task framework notifies the distributed training engine of a resource allocation result.

S809: The distributed training engine is used as a task runtime node, and distributes a compute task (including a plurality of subtasks) to a target compute device for execution during running. The target compute device may include a device that provides the conventional compute resource, for example, a CPU server or a GPU server. The target compute device may also include the programmable compute device described above. This is not limited in embodiments of this application. For example, the programmable network interface card or the programmable switch may be configured to implement an operation process related to the Filter operator, the Accumulator operator, or the like in a distributed training process, to complete a part of subtasks related to distributed training in a communication process, thereby improving overall performance.

S810: In a process of performing computing, the compute task framework further collects, based on acceleration billing mode information carried in the acceleration request, an amount of data processed by each computing acceleration device, to generate billing log data, and push billing log information to a billing module.

S811: After the computing ends, the compute task framework may feed back a computing acceleration result of the distributed training job task to the acceleration management and control module, and the acceleration management and control module may provide the computing acceleration result for the tenant.

With reference to the foregoing embodiments, an embodiment of this application further provides a computing acceleration apparatus based on a cloud computing technology, and the computing acceleration apparatus may be configured to perform the method performed by the cloud management platform in the foregoing method embodiments. The cloud management platform may be configured to manage an infrastructure, and the infrastructure includes a plurality of servers and a plurality of programmable compute devices.

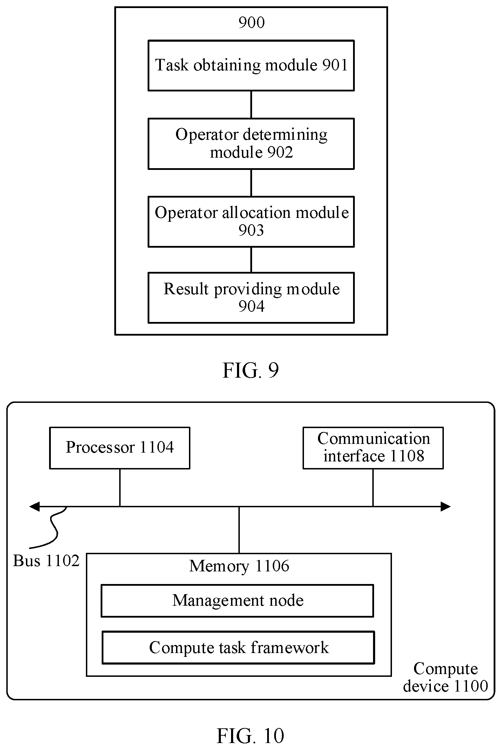

As shown in FIG. 9, the apparatus 900 may include: a task obtaining module 901, configured to obtain a job task entered by a tenant, where the job task carries an acceleration request and job processing logic; an operator determining module 902, configured to determine, based on the acceleration request, processing logic that is in the job processing logic and that is applicable to at least one of the plurality of programmable compute devices, and determine other processing logic that is in the job processing logic and that is applicable to at least one of the plurality of servers; an operator allocation module 903, configured to allocate, to at least one of the plurality of programmable compute devices for processing, the processing logic that is in the job processing logic and that is applicable to the at least one of the plurality of programmable compute devices, and allocate, to at least one of the plurality of servers for processing, other processing logic that is in the job processing logic and that is applicable to the at least one of the plurality of servers; and a result providing module 904, configured to summarize a processing result of the at least one programmable compute device of the plurality of programmable devices and a processing result of the at least one of the plurality of servers, and provide a summarized result for the tenant. For a specific implementation, refer to the embodiments described with reference to the cloud management platform in the foregoing method embodiments. Details are not described herein again.

It should be understood that division of the units in the foregoing apparatus is merely logical function division. In an actual implementation, all or a part of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general purpose processor, for example, a central processing unit (central processing unit, CPU) or a microprocessor. The memory is a memory inside the apparatus or a memory outside the apparatus. Alternatively, the units in the apparatus may be implemented in a form of hardware circuits, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented through a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, to implement functions of some or all of the foregoing units. All of the units in the foregoing apparatus may be implemented in a form of software invoked by a processor; or all of the units may be implemented in a form of hardware circuit; or a part of the units may be implemented in a form of software invoked by a processor, and a remaining part of the units may be implemented in a form of hardware circuit.

In embodiments of this application, the processor is a circuit having a signal processing capability. In an implementation, the processor may be a circuit having an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In a reconfigurable hardware circuit, a process in which the processor loads a configuration document to implement hardware circuit configuration may be understood as a process in which the processor loads instructions to implement functions of a part or all of the units. In addition, the processor may alternatively be a hardware circuit designed for artificial intelligence, and may be understood as the ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or a part of the units of the apparatus may be integrated, or may be implemented independently. In an implementation, these units are integrated together and implemented in a form of a system-on-a-chip (system-on-a-chip, SoC). The SoC may include at least one processor, configured to implement any one of the methods or implement functions of the units in the apparatus. Types of the at least one processor may be different. For example, the at least one processor includes a CPU and an FPGA, a CPU and an artificial intelligence processor, or a CPU and a GPU.

This application further provides a compute device 1100. As shown in FIG. 10, the compute device 1100 includes a bus 1102, a processor 1104, a memory 1106, and a communication interface 1108. The processor 1104, the memory 1106, and the communication interface 1108 communicate with each other through the bus 1102. The compute device 1100 may be a server or a terminal device. It should be understood that a quantity of processors and a quantity of memories in the compute device 1100 are not limited in this application.

The bus 1102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented through only one line in FIG. 10. However, it does not indicate that there is only one bus or only one type of bus. The bus 1102 may include a path for transmitting information between components (such as the memory 1106, the processor 1104, and the communication interface 1108) of the compute device 1100.

The processor 1104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1106 may include a volatile memory (volatile memory), for example, a random access memory (random access memory, RAM). The processor 1104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1106 stores executable program code, and the processor 1104 executes the executable program code to separately implement the functions of the cloud management platform and a computational power runtime node, to implement the method in embodiments of this application. In other words, the memory 1106 stores instructions used to perform the method in embodiments of this application.

The communication interface 1108 uses a transceiver module, for example, but not limited to, a network interface card or a transceiver, to implement communication between the compute device 1100 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

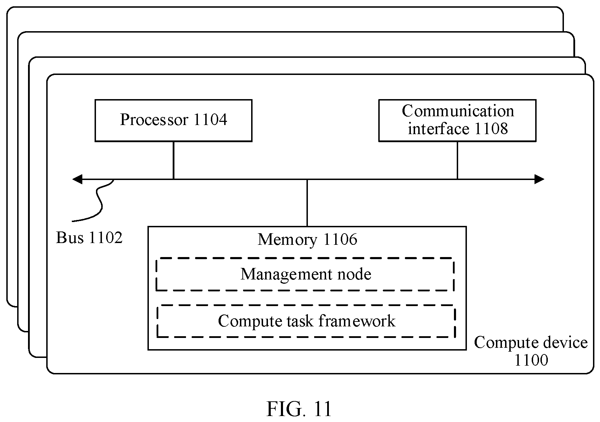

As shown in FIG. 11, the compute device cluster includes at least one compute device 1100. A memory 1106 in one or more compute devices 1100 in the compute device cluster may store same instructions used to perform the method in embodiments of this application.

In some possible implementations, the memory 1106 in the one or more compute devices 1100 in the compute device cluster may also separately store some instructions used to perform the method in embodiments of this application. In other words, a combination of the one or more compute devices 1100 may jointly execute the instructions used to perform the method in embodiments of this application.

It should be noted that memories 1106 in different compute devices 1100 in the compute device cluster may store different instructions, and the different instructions are separately used to perform some functions of the cloud service system. In other words, the instructions stored in memories 1106 in different compute devices 1100 may implement functions of one or more modules of the cloud management platform and a computational power runtime node.

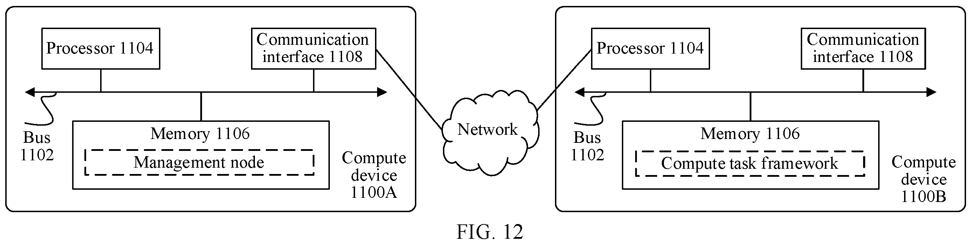

In some possible implementations, the one or more compute devices in the compute device cluster may be connected through a network. The network may be a wide area network, a local area network, or the like. FIG. 12 shows a possible implementation. As shown in FIG. 12, two compute devices 1100A and 1100B are connected through a network. Specifically, each compute device is connected to the network through a communication interface in the compute device. In this possible implementation, a memory 1106 in the compute device 1100A stores instructions for executing functions of the cloud management platform. In addition, a memory 1106 in the compute device 1100B stores instructions for executing functions of the computational power runtime node.

A connection manner between compute device clusters shown in FIG. 12 may be that, in consideration of a method for providing computational power provided in this application, a user needs to define a function configuration (for example, storing a large amount of data) by itself and implement a computing function, and therefore, it is considered that a function implemented by the computational power runtime node is performed by the compute device 1100B.

It should be understood that functions of the compute device 1100A shown in FIG. 12 may alternatively be completed by a plurality of compute devices 1100. Similarly, functions of the compute device 1100B may alternatively be implemented by a plurality of compute devices 1100.

An embodiment of this application further provides another compute device cluster. For a connection relationship between compute devices in the compute device cluster, refer to the connection manners in the compute device cluster in FIG. 11 and FIG. 12 similarly. A difference lies in that a memory 1106 in one or more compute devices 1100 in the compute device cluster may store same instructions used to perform the method for providing computational power.

In some possible implementations, the memory 1106 in the one or more compute devices 1100 in the compute device cluster may also separately store some instructions used to perform the method for providing computational power. In other words, a combination of the one or more compute devices 1100 may jointly execute the instructions used to perform the method for providing computational power.

An embodiment of this application further provides a computer program product including instructions. The computer program product may be software or a program product that includes instructions and that can run on a compute device or can be stored in any usable medium. When the computer program product runs on at least one compute device, the at least one compute device is caused to perform the method for providing computational power.

Embodiments of this application further provide a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions indicate a compute device to perform the method for providing computational power.

Finally, it should be noted that the foregoing embodiments are merely intended for describing the technical solutions of the present invention but not for limiting the present invention. Although the present invention is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of the present invention.

An embodiment of this application further relates to a processor. The processor is configured to invoke a computer program or computer instructions stored in a memory, to cause the processor to perform the method according to the foregoing method embodiments.

Any one of the processors mentioned above may be a general purpose central processing unit, a microprocessor, an application-specific integrated circuit (application-specific integrated circuit, ASIC), or one or more integrated circuits configured to control program execution of the method in the embodiment shown in FIG. 12. Any one of the processors mentioned above may be a read-only memory (read-only memory, ROM), another type of static storage device that can store static information and instructions, a random access memory (random access memory, RAM), or the like.

It should be understood that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

The computer program instructions may alternatively be stored in a computer-readable memory that can indicate a computer or another programmable data processing device to operate in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device to generate computerimplemented processing. Therefore, the instructions executed on the computer or the another programmable device provide steps for implementing a specific function in one or more processes in the flowcharts and/or in one or more blocks in the block diagrams.

Apparently, a person skilled in the art may make various modifications and variations to embodiments of this application without departing from the scope of embodiments of this application. In this case, if the modifications and variations made to embodiments this application fall within the scope of the claims of this application and equivalent technologies thereof, this application is intended to cover these modifications and variations.

## Claims

1. A computing acceleration method based on a cloud computing technology, wherein the method is applied to a cloud management platform, the cloud management platform is configured to manage an infrastructure, the infrastructure comprises a plurality of servers and a plurality of programmable compute devices, and the method comprises:
obtaining, by the cloud management platform, a job task entered by a tenant, wherein the job task carries an acceleration request and job processing logic;
determining, by the cloud management platform based on the acceleration request, processing logic that is in the job processing logic and that is applicable to at least one of the plurality of programmable compute devices, and determining other processing logic that is in the job processing logic and that is applicable to at least one of the plurality of servers;
allocating, by the cloud management platform to at least one of the plurality of programmable compute devices for processing, the processing logic that is in the job processing logic and that is applicable to the at least one of the plurality of programmable compute devices, and allocating, to the at least one of the plurality of servers for processing, the other processing logic that is in the job processing logic and that is applicable to the at least one of the plurality of servers; and
summarizing, by the cloud management platform, a processing result of the at least one programmable compute device of the plurality of programmable compute devices and a processing result of the at least one of the plurality of servers, and providing a summarized result for the tenant.

2. The method according to claim 1, wherein the job task comprises a big data job, and the plurality of servers comprise a CPU server;
the determining, by the cloud management platform based on the acceleration request, the processing logic that is in the job processing logic and that is applicable to the at least one programmable compute device of the plurality of programmable devices, and determining the other processing logic that is in the job processing logic and that is applicable to the at least one of the plurality of servers comprises:
determining, by the cloud management platform, a plurality of operators that are related to the job task, compiling and running each operator on the plurality of programmable compute devices, using a data processing throughput as a performance evaluation indicator, and selecting a programmable compute device whose performance evaluation indicator meets a criterion as a target programmable compute device; and
the allocating, by the cloud management platform to the at least one of the plurality of programmable compute devices for processing, the processing logic that is in the job processing logic and that is applicable to the at least one of the plurality of programmable compute devices, and allocating, to the at least one of the plurality of servers for processing, the other processing logic that is in the job processing logic and that is applicable to the at least one of the plurality of servers comprises:
allocating, by the cloud management platform to the target programmable compute device for processing, a Filter operator, an Accumulator operator, a ReduceByKey operator, and a Broadcast operator that are related to the job task; and
allocating, by the cloud management platform to at least one CPU server in the plurality of servers for processing, a Map operator, a Transform operator, and an Evaluate operator that are related to the job task.

3. The method according to claim 1, wherein the job task comprises a distributed training job, and the plurality of servers comprise a GPU server;
the determining, by the cloud management platform based on the acceleration request, the processing logic that is in the job processing logic and that is applicable to the at least one programmable compute device of the plurality of programmable devices, and determining the other processing logic that is in the job processing logic and that is applicable to the at least one of the plurality of servers comprises:
determining, by the cloud management platform, a plurality of operators that are related to the job task, compiling and running each operator on the plurality of programmable compute devices, using a data processing throughput as a performance evaluation indicator, and selecting a programmable compute device whose performance evaluation indicator meets a criterion as a target programmable compute device; and
the allocating, by the cloud management platform to the at least one of the plurality of programmable compute devices for processing, the processing logic that is in the job processing logic and that is applicable to the at least one of the plurality of programmable compute devices, and allocating, to the at least one of the plurality of servers for processing, the other processing logic that is in the job processing logic and that is applicable to the at least one of the plurality of servers comprises:
allocating, by the cloud management platform to the target programmable compute device for processing, a Filter operator, an Accumulator operator, a ReduceByKey operator, and a Broadcast operator that are related to the job task; and
allocating, by the cloud management platform to at least one GPU server in the plurality of servers for processing, a Map operator, a Transform operator, and an Evaluate operator that are related to the job task.

4. The method according to claim 2 or 3, wherein the target programmable compute device comprises a programmable network interface card and a programmable switch, and the allocating, by the cloud management platform to the target programmable compute device for processing, the Filter operator, the Accumulator operator, the ReduceByKey operator, and the Broadcast operator that are related to the job task comprises:
allocating, by the cloud management platform to the programmable network interface card for processing, the Filter operator and the Accumulator operator that are related to the job task; and
allocating, by the cloud management platform to the programmable switch for processing, the ReduceByKey operator and the Broadcast operator that are related to the job task.

5. The method according to any one of claims 2 to 4, wherein the determining, by the cloud management platform, the plurality of operators that are related to the job task comprises:
invoking, by the cloud management platform, an acceleration engine to generate a computational graph for the job processing logic, and determining, based on the computational graph, the plurality of operators that are related to the job task.

6. The method according to claim 5, wherein the invoking, by the cloud management platform, the acceleration engine to generate the computational graph for the job processing logic comprises:
starting, by the cloud management platform, an acceleration framework instance based on the acceleration request, and invoking, through the acceleration framework instance, the acceleration engine to generate the computational graph for the job processing logic.

7. The method according to any one of claims 2 to 6, wherein the cloud management platform selects, in any one of the following evaluation solutions, the programmable compute device whose performance evaluation indicator meets the criterion:
a runtime sampling evaluation solution, a simulation-based evaluation solution, a benchmarking estimation solution, or a model-based estimation solution.

8. The method according to any one of claims 1 to 7, wherein the acceleration request comprises user information, and before the determining, by the cloud management platform based on the acceleration request, the processing logic that is in the job processing logic and that is applicable to the at least one of the plurality of programmable compute devices, and determining the other processing logic that is in the job processing logic and that is applicable to the at least one of the plurality of servers, the method further comprises:
performing, by the cloud management platform, identity authentication on the tenant based on the user information, and checking a cloud resource quota corresponding to the tenant.

9. The method according to any one of claims 1 to 8, wherein the acceleration request further comprises acceleration billing mode information, and the method further comprises:
generating, by the cloud management platform, billing log information based on the acceleration billing mode information when processing the at least one programmable compute device of the plurality of programmable devices and/or when processing the at least one of the plurality of servers.

10. The method according to claim 9, wherein an acceleration billing mode supported by the cloud management platform comprises at least one of the following:
a pay-per-usage billing mode, a pay-per-computing acceleration effect billing mode, a pay-per-resource cluster billing mode, or a time-limited or usage-limited billing mode.

11. The method according to any one of claims 1 to 10, wherein one of the plurality of servers of the infrastructure comprises any one of the following types: a bare metal server, a virtual machine, a container, a lightweight container, or a serverless instance.

12. The method according to any one of claims 1 to 11, wherein the plurality of servers use the programmable network interface card, and the plurality programmable compute devices comprise the programmable network interface card.

13. The method according to any one of claims 1 to 11, wherein the plurality of servers and the plurality of programmable compute devices of the infrastructure are deployed in rack servers in a same data center, and the plurality of programmable compute devices comprise the programmable switch that performs forwarding between the plurality of servers.

14. The method according to any one of claims 1 to 11, wherein the plurality of servers and the plurality of programmable compute devices of the infrastructure are deployed across rack servers in different data centers, and the plurality of programmable compute devices comprise the programmable switch that performs forwarding between different rack servers.

15. A cloud management platform, wherein the cloud management platform is configured to manage an infrastructure, the infrastructure comprises a plurality of servers and a plurality of programmable compute devices, and the cloud management platform comprises:
a task obtaining module, configured to obtain a job task entered by a tenant, wherein the job task carries an acceleration request and job processing logic;
an operator determining module, configured to determine, based on the acceleration request, processing logic that is in the job processing logic and that is applicable to at least one of the plurality of programmable compute devices, and determine other processing logic that is in the job processing logic and that is applicable to at least one of the plurality of servers;
an operator allocation module, configured to allocate, to the at least one of the plurality of programmable compute devices for processing, the processing logic that is in the job processing logic and that is applicable to the at least one of the plurality of programmable compute devices, and allocate, to the at least one of the plurality of servers for processing, the other processing logic that is in the job processing logic and that is applicable to the at least one of the plurality of servers; and
a result providing module, configured to summarize a processing result of the at least one programmable compute device of the plurality of programmable devices and a processing result of the at least one of the plurality of servers, and provide a summarized result for the tenant.

16. A computer program product comprising instructions, wherein when the instructions are executed by a compute device cluster, the compute device cluster is caused to perform the method according to any one of claims 1 to 14.

17. A computer-readable storage medium, comprising computer program instructions, wherein when the computer program instructions are executed by a compute device cluster, the compute device cluster performs the method according to any one of claims 1 to 14.

18. A compute device cluster, comprising at least one compute device, wherein each compute device comprises a processor and a memory; and
the processor of the at least one compute device is configured to execute instructions stored in the memory of the at least one compute device, to cause the compute device cluster to perform the method according to any one of claims 1 to 14.
